# EUROPEAN PATENT APPLICATION

(11) **EP 4 699 747 A1**
(43) Date of publication of application: **25.02.2026**
(21) Application number: 24806924.7
(22) Date of filing: 12.04.2024
(51) Int. Cl.: B25J 19/00, B25J 9/06

(54) **ROBOT**

(30) Priority: 16.05.2023 JP 2023080905
(71) Applicant: KAWASAKI JUKOGYO KABUSHIKI KAISHA, Kobe-shi, Hyogo 650-8670 (JP)
(72) Inventor: KAWATA, Takuya, Chuo-ku, Kobe-shi Hyogo 650-8670 (JP); YAMAMOTO, Masato, Chuo-ku, Kobe-shi Hyogo 650-8670 (JP); NAKAJIMA, Masashi, Chuo-ku, Kobe-shi Hyogo 650-8670 (JP); TATSUTA, Norihisa, Chuo-ku, Kobe-shi Hyogo 650-8670 (JP)
(74) Representative: Müller-Boré & Partner Patentanwälte PartG mbB
(86) International application number: PCT/JP2024/014815
(87) International publication number: WO 2024/236970

(57) **Abstract**

A robot (100) includes a restriction mechanism (30) including a first restrictor (31) and a second restrictor (32). At least one of the first restrictor and the second restrictor includes a buffer (33). At least one of the first restrictor and the second restrictor includes a deformable member (34) configured to deform due to a collision between the first restrictor and the second restrictor via the buffer.

## Description

### Technical Field

The present disclosure relates to a robot.

### Background Art

Conventionally, a robot including a buffer is known. Japanese Patent Laid-Open No. 2019-076975 discloses a robot including a base, a first arm, and a second arm. The first arm is rotatably connected to the base. The second arm is rotatably connected to the first arm. A protrusion protruding in a direction away from the rotation axis of the first arm is provided on the first arm. An elastic portion is provided on the protrusion as a buffer made of rubber, which is an elastic body. A restrictor is provided on the base. The restrictor protrudes in the direction away from the rotation axis of the first arm. As the first arm rotates, the elastic portion is sandwiched between the protrusion of the first arm and the restrictor of the base and is elastically deformed.

### Prior Art

### Patent Document

Patent Document 1: Japanese Patent Laid-Open No. 2019-076975

### Summary of the Invention

### Problems to be Solved by the Invention

However, in the robot disclosed in Japanese Patent Laid-Open No. 2019-076975, while the elastic portion can absorb the collision energy between the protrusion and the restrictor, there are variations in the way the elastic portion is crushed, and thus the elastic portion may not be able to sufficiently absorb the collision energy between the protrusion and the restrictor. Therefore, there is a demand for a robot that can sufficiently absorb the collision energy between the protrusion and the restrictor.

The present disclosure is intended to solve the above problems. The present disclosure aims to provide a robot capable of sufficiently absorbing the collision energy between a first restrictor and a second restrictor even when there are variations in the way a buffer is crushed. Means for Solving the Problems

A robot according to an aspect of the present disclosure includes a first member, a second member configured to move relative to the first member, and a restriction mechanism including a first restrictor on the first member and a second restrictor on the second member to restrict a relative movement range of the second member with respect to the first member. At least one of the first restrictor and the second restrictor includes a buffer to cushion a collision between the first restrictor and the second restrictor, and at least one of the first restrictor and the second restrictor includes a deformable member configured to deform due to the collision between the first restrictor and the second restrictor via the buffer when the second member moves relative to the first member.

As described above, the robot according to this aspect of the present disclosure includes the restriction mechanism including the first restrictor on the first member and the second restrictor on the second member to restrict the relative movement range of the second member with respect to the first member. At least one of the first restrictor and the second restrictor includes the buffer to cushion the collision between the first restrictor and the second restrictor, and at least one of the first restrictor and the second restrictor includes the deformable member configured to deform due to the collision between the first restrictor and the second restrictor via the buffer when the second member moves relative to the first member. Accordingly, the buffer can absorb the collision energy between the first restrictor and the second restrictor, and the collision energy between the first restrictor and the second restrictor can also be absorbed by the deformation of the deformable member due to the collision between the first restrictor and the second restrictor via the buffer. Consequently, even when there are variations in the way the buffer is crushed, the collision energy between the first restrictor and the second restrictor can be sufficiently absorbed. Advantageous Effect of the Invention

According to the present disclosure, it is possible to sufficiently absorb the collision energy between the first restrictor and the second restrictor even when there are variations in the way the buffer is crushed

### Brief Description of the Drawings

FIG. 1 is a diagram showing a robot according to an embodiment.
FIG. 2 is a perspective view showing a restriction mechanism according to the embodiment.
FIG. 3 is a sectional view showing the restriction mechanism according to the embodiment.
FIG. 4 is a sectional view showing a state in which a deformable member of the restriction mechanism according to the embodiment is bent.
FIG. 5 is a partial sectional view of the restriction mechanism according to the embodiment, as viewed in the collision direction.
FIG. 6 is a sectional view showing a restriction mechanism according to a first modified example of the embodiment.
FIG. 7 is a sectional view showing a restriction mechanism according to a second modified example of the embodiment.
FIG. 8 is a sectional view showing a restriction mechanism according to a third modified example of the embodiment.
FIG. 9 is a sectional view showing a restriction mechanism according to a fourth modified example of the embodiment.

### Modes for Carrying Out the Invention

An embodiment embodying the present disclosure is hereinafter described on the basis of the drawings. In the following description, an upward-downward direction is defined as a Z direction. The upper side is defined as a Z1 side, and the lower side is defined as a Z2 side.

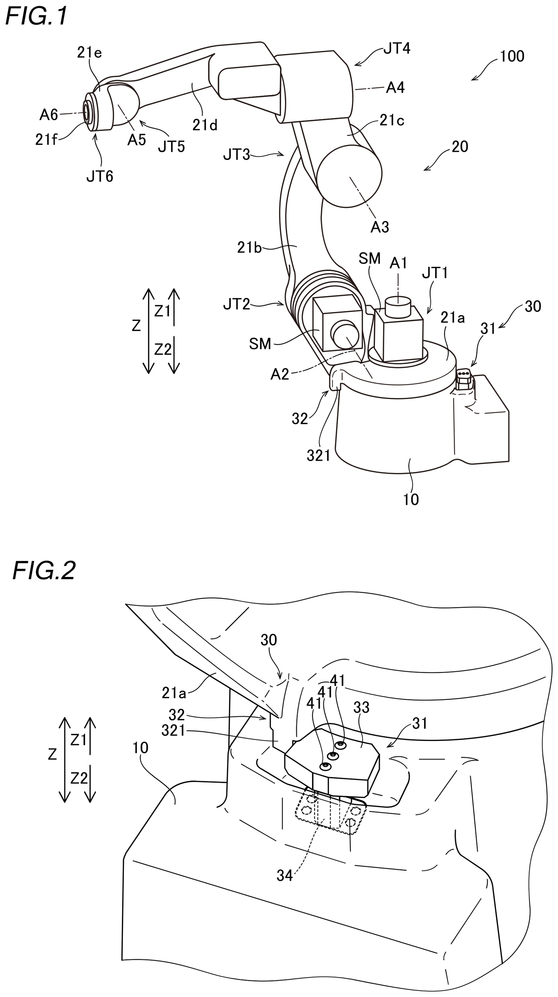

As shown in FIG. 1, a robot 100 is an industrial robot. Specifically, the robot 100 is a 6-axis vertical articulated robot. The robot 100 includes a base 10, an arm 20, and a restriction mechanism 30. The base 10 is an example of a first member.

The base 10 is fixed to an installation surface such as a floor surface by fasteners such as bolts.

An end effector is attached to a distal end of the arm 20. The arm 20 moves the end effector. The arm 20 includes a plurality of links 21a, 21b, 21c, 21d, 21e, and 21f. The plurality of links 21a, 21b, 21c, 21d, 21e, and 21f are arranged in this order from the proximal end side to the distal end side. The arm 20 includes a plurality of joints JT1, JT2, JT3, JT4, JT5, and JT6. The plurality of joints JT1, JT2, JT3, JT4, JT5, and JT6 are arranged in this order from the proximal end side to the distal end side. The link 21a is an example of a second member.

Each of the plurality of joints JT1, JT2, JT3, JT4, JT5, and JT6 includes a servomotor SM as a drive source. Each of the plurality of joints JT1, JT2, JT3, JT4, JT5, and JT6 rotationally moves the corresponding link by driving the servomotor SM. For convenience, only the servomotors SM of the joints JT1 and JT2 are shown in FIG. 1.

The joint JT1 is located at a junction between the base 10 and link 21a. The joint JT1 rotationally moves the link 21a relative to the base 10 around a rotation axis A1 in the Z direction. The joint JT2 is located at a junction between the link 21a and the link 21b. The joint JT2 rotationally moves the link 21b relative to the link 21a around a rotation axis A2 perpendicular to the rotation axis A1. The joint JT3 is located at a junction between the link 21b and the link 21c. The joint JT3 rotationally moves the link 21c relative to the link 21b around a rotation axis A3 parallel to the rotation axis A2.

The joint JT4 is located at a junction between the link 21c and the link 21d. The joint JT4 rotationally moves the link 21d relative to the link 21c around a rotation axis A4 perpendicular to the rotation axis A3. The joint JT5 is located at a junction between the link 21d and the link 21e. The joint JT5 rotationally moves the link 21e relative to the link 21d around a rotation axis A5 perpendicular to the rotation axis A4. The joint JT6 is located at a junction between the link 21e and the link 21f. The joint JT6 rotationally moves the link 21f relative to the link 21e around a rotation axis A6 perpendicular to the rotation axis A5.

The restriction mechanism 30 is a mechanical restriction mechanism that restricts the relative rotational movement range of the link 21a, which is a movable member, with respect to the base 10, which is a fixed member. For example, when an abnormality occurs in which the link 21a moves beyond the software limit of the rotational movement range, the restriction mechanism 30 mechanically restricts the relative rotational movement range of the link 21a with respect to the base 10.

The restriction mechanism 30 includes a first restrictor 31 and a second restrictor 32. The first restrictor 31 is provided on the base 10 and protrudes in a Z1 direction. The second restrictor 32 is provided on the link 21a and protrudes in a Z2 direction. The second restrictor 32 includes a protrusion 321 that protrudes in the Z2 direction. The protrusion 321 is made of metal. The protrusion 321 is made of a metal material such as spheroidal graphite cast iron.

In this embodiment, as shown in FIG. 2, the first restrictor 31 includes a buffer 33 to cushion a collision between the first restrictor 31 and the second restrictor 32, and a deformable member 34 that deforms due to the collision between the first restrictor 31 and the second restrictor 32 via the buffer 33 when the link 21a rotationally moves relative to the base 10.

The buffer 33 is made of resin. Specifically, the buffer 33 is made of a resin material such as polyurethane elastomer. The buffer 33 has a block shape and is removably fixed. Specifically, the buffer 33 is removably fixed to the deformable member 34 by fasteners 41 such as bolts.

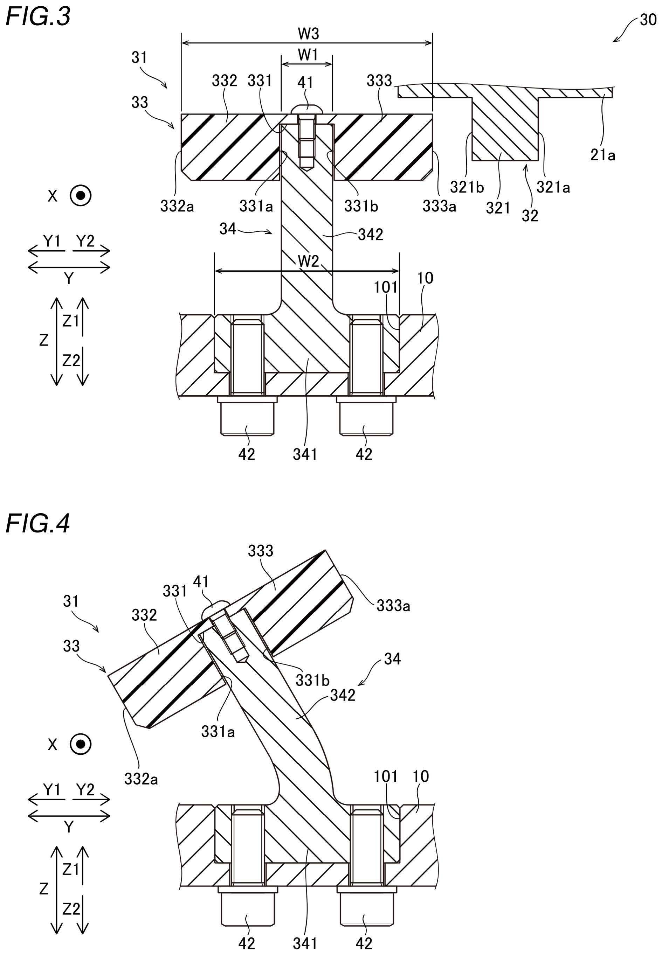

As shown in FIG. 3, the buffer 33 includes a fitting 331, a first transmitting portion 332, and a second transmitting portion 333. In the following, a direction in which the first restrictor 31 and the second restrictor 32 collide via the buffer 33 is defined as a Y direction, a first side in the Y direction is defined as a Y1 side, and a second side in the Y direction is defined as a Y2 side. A direction perpendicular to the Y direction and the Z direction is defined as an X direction.

The fitting 331 includes a recess recessed from the Z2 direction side toward the Z1 direction side, and fits into a deformable portion 342 (described below) of the deformable member 34. The fitting 331 also includes side surfaces 331a and 331b that contact the deformable portion 342 of the deformable member 34 when the first restrictor 31 and the second restrictor 32 collide via the buffer 33. The side surfaces 331a and 331b extend in the Z direction and are opposite to each other in the Y direction. The buffer 33 transmits the collision between the first restrictor 31 and the second restrictor 32 to the deformable member 34 via the side surface 331a or 331b of the fitting 331.

The fasteners 41 are arranged at the position of the fitting 331. The fasteners 41 are inserted through through-holes provided in a portion of the buffer 33 including the fitting 331, and are screwed into screw holes provided in a portion of the deformable member 34 that is fitted into the fitting 331.

The first transmitting portion 332 is arranged on the first side, which is the Y1 direction side, with respect to the deformable portion 342 of the deformable member 34, and transmits the collision between the first restrictor 31 and the second restrictor 32 on the first side, which is the Y1 direction side, with respect to the deformable portion 342 of the deformable member 34. The first transmitting portion 332 includes a contact surface 332a that contacts a contact surface 321a of the protrusion 321 of the second restrictor 32. The contact surface 321a and the contact surface 332a extend in the Z direction, and face each other in the Y direction when the first restrictor 31 and the second restrictor 32 collide.

The second transmitting portion 333 is provided on the Y2 direction side opposite to the first transmitting portion 332, and transmits the collision between the first restrictor 31 and the second restrictor 32 on the second side, which is the Y2 direction side, with respect to the deformable member 34. The second transmitting portion 333 includes a contact surface 333a that contacts a contact surface 321b of the protrusion 321 of the second restrictor 32. The contact surface 321b and the contact surface 333a extend in the Z direction, and face each other in the Y direction when the first restrictor 31 and the second restrictor 32 collide.

When the link 21a rotates in a first direction around the rotation axis A1, the second restrictor 32 approaches the first restrictor 31 from the Y1 direction side toward the Y2 direction side. In such a case, the contact surface 321a of the protrusion 321 of the second restrictor 32 contacts the contact surface 332a of the first transmitting portion 332. Then, the collision between the first restrictor 31 and the second restrictor 32 is transmitted to the deformable member 34 via the side surface 331a of the fitting 331, which contacts a side surface on the Y1 direction side of a distal end of the deformable member 34 fitted into the fitting 331.

When the link 21a rotates in a second direction around the rotation axis A1, the second restrictor 32 approaches the first restrictor 31 from the Y2 direction side toward the Y1 direction side. In such a case, the contact surface 321b of the protrusion 321 of the second restrictor 32 contacts the contact surface 333a of the second transmitting portion 333. Then, the collision between the first restrictor 31 and the second restrictor 32 is transmitted to the deformable member 34 via the side surface 331b of the fitting 331, which contacts a side surface on the Y2 direction side of the distal end of the deformable member 34 fitted into the fitting 331.

The fitting 331 is arranged in a central portion of the buffer 33 in the Y direction. The first transmitting portion 332 and the second transmitting portion 333 are arranged on the Y1 direction side and the Y2 direction side, respectively, with respect to the fitting 331. The first transmitting portion 332 and the second transmitting portion 333 are thicker in the Z direction than a portion of the buffer 33 that includes the fitting 331. The fitting 331, the first transmitting portion 332, and the second transmitting portion 333 are integral and unitary with each other.

In this embodiment, the buffer 33 has a mechanical strength lower than the mechanical strength of the deformable member 34. For example, the buffer 33 has a tensile strength lower than the tensile strength of the deformable member 34. For example, the tensile strength of the buffer 33 is about 237 N/mm, while the tensile strength of the deformable member 34 is about 690 N/mm or more.

The deformable member 34 is made of metal. Specifically, the deformable member 34 is made of a metal material such as carbon steel for machine structure. The deformable member 34 has a T-shape and is removably fixed. Specifically, the deformable member 34 is removably fixed to the base 10 by fasteners 42 such as bolts.

The deformable member 34 includes a base 341 and the deformable portion 342. The base 341 and the deformable portion 342 are integral and unitary with each other.

The base 341 is a mount for attaching the deformable member 34 to the base 10. The base 341 has a plate shape and is arranged in a recess 101 provided in a portion of the base 10 in which the deformable member 34 is arranged. The recess 101 is recessed from the Z1 direction side toward the Z2 direction side. The base 341 is removably fixed to the base 10 in the recess 101 by the fasteners 42. The fasteners 42 are inserted through through-holes provided in a portion of the base 10 including the recess 101, and are screwed into screw holes provided in the base 341.

The deformable portion 342 is connected to the base 341. The deformable portion 342 has a plate shape and extends perpendicularly from the base 341.

In this embodiment, as shown in FIG. 4, when the first restrictor 31 and the second restrictor 32 collide via the buffer 33, the deformable portion 342 bends and deforms in the Y direction in which the first restrictor 31 and the second restrictor 32 collide via the buffer 33. When the first restrictor 31 and the second restrictor 32 collide on the Y1 direction side via the first transmitting portion 332 of the buffer 33, the collision load is applied in the Y2 direction, and thus the deformable portion 342 bends and deforms in the Y2 direction. When the first restrictor 31 and the second restrictor 32 collide on the Y2 direction side via the second transmitting portion 333 of the buffer 33, the collision load is applied in the Y1 direction, and thus the deformable portion 342 bends and deforms in the Y1 direction. When the collision load is applied to a distal end of the deformable portion 342, the deformable portion 342 bends with a deformation amount corresponding to the collision load, using a junction with the base 341, which is a base portion of the deformable portion 342, as a fulcrum and plastically deforms. For convenience, FIG. 4 illustrates an example in which the deformable portion 342 bends in the Y1 direction.

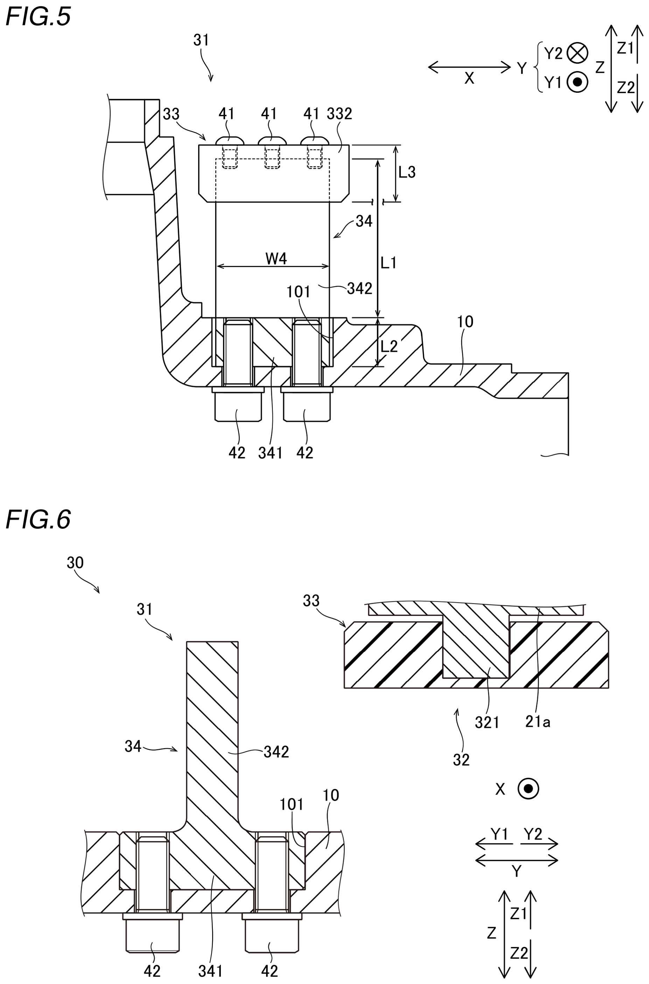

In this embodiment, as shown in FIG. 3, the deformable portion 342 has a width smaller than the width of the base 341 in the Y direction in which the first restrictor 31 and the second restrictor 32 collide via the buffer 33. The width W1 of the deformable portion 342 in the Y direction is smaller than the width W2 of the base 341 in the Y direction. The deformable portion 342 also has a width smaller than the width of the buffer 33 in the Y direction in which the first restrictor 31 and the second restrictor 32 collide via the buffer 33. The width W1 of the deformable portion 342 in the Y direction is smaller than the width W3 of the buffer 33 in the Y direction. The width W1 of the deformable portion 342 in the Y direction is also smaller than the width W4 of the deformable portion 342 in the X direction shown in FIG. 5.

As shown in FIG. 5, the deformable portion 342 is longer than the base 341 in the Z direction perpendicular to the mounting surface of the deformable member 34. The length L1 of the deformable portion 342 in the Z direction is larger than the length L2 of the base 341 in the Z direction. The deformable portion 342 is also longer than the buffer 33 in the Z direction. The length L1 of the deformable portion 342 in the Z direction is larger than the length L3 of the buffer 33 in the Z direction. The length L1 of the deformable portion 342 in the Z direction is also larger than the width W1 of the deformable portion 342 in the Y direction shown in FIG. 3.

The collision between the first restrictor 31 and the second restrictor 32 via the buffer 33 is now described with reference to FIGS. 3 and 4. For convenience, a case is described in which the first restrictor 31 and the second restrictor 32 collide on the Y2 direction side via the buffer 33, but the same applies to a case in which the first restrictor 31 and the second restrictor 32 collide on the Y1 direction side via the buffer 33.

As shown in FIG. 3, the second restrictor 32 approaches the first restrictor 31 from the Y2 direction side toward the Y1 direction side, and the contact surface 321b of the protrusion 321 of the second restrictor 32 collides in the Y1 direction with the contact surface 333a of the second transmitting portion 333 of the buffer 33. At this time, the second transmitting portion 333 of the buffer 33 is crushed and hardened in the Y1 direction, and transmits the collision to the deformable member 34 while absorbing the collision energy. Specifically, the side surface 331b of the fitting 331 of the buffer 33 presses in the Y1 direction the side surface on the Y2 direction side of the distal end of the deformable member 34 fitted into the fitting 331 such that the collision is transmitted to the deformable portion 342 of the deformable member 34. Then, as shown in FIG. 4, the deformable portion 342 bends and deforms in the Y1 direction while absorbing the collision energy. When the collision energy is completely absorbed, the deformation of the deformable portion 342 stops.

The deformed buffer 33 can be removed from the deformable member 34 and replaced by removing the fasteners 41. The deformed deformable member 34 can be removed from the base 10 and replaced by removing the fasteners 42.

### Advantageous Effects of This Embodiment

According to this embodiment, as described above, the robot 100 includes the restriction mechanism 30 including the first restrictor 31 on the base 10 and the second restrictor 32 on the link 21a to restrict the relative movement range of the link 21a with respect to the base 10, the first restrictor 31 includes the buffer 33 to cushion the collision between the first restrictor 31 and the second restrictor 32, and the deformable member 34 configured to deform due to the collision between the first restrictor 31 and the second restrictor 32 via the buffer 33 when the link 21a moves relative to the base 10. Accordingly, the buffer 33 can absorb the collision energy between the first restrictor 31 and the second restrictor 32, and the collision energy between the first restrictor 31 and the second restrictor 32 can also be absorbed by the deformation of the deformable member 34 due to the collision between the first restrictor 31 and the second restrictor 32 via the buffer 33. Consequently, even when there are variations in the way the buffer 33 is crushed, the collision energy between the first restrictor 31 and the second restrictor 32 can be sufficiently absorbed.

Furthermore, when the robot 100 is a vertical articulated robot as in this embodiment, the effect of the collision between the first restrictor 31 and the second restrictor 32 is transmitted to a distal end of the robot 100 via each link, but when the collision energy between the first restrictor 31 and the second restrictor 32 cannot be sufficiently absorbed, a large load is disadvantageously applied to the distal end of the robot 100. In this regard, according to this embodiment, the collision energy between the first restrictor 31 and the second restrictor 32 can be sufficiently absorbed, and thus a load applied to the distal end of the robot 100 can be reduced.

According to this embodiment, as described above, the deformable member 34 includes the base 341 and the deformable portion 342 connected to the base 341 and having a width smaller than the width of the base 341 in the Y direction in which the first restrictor 31 and the second restrictor 32 collide via the buffer 33. Accordingly, the width of the deformable portion 342 is smaller than the width of the base 341 in the Y direction in which the first restrictor 31 and the second restrictor 32 collide via the buffer 33, and thus the deformable portion 342 can be relatively easily deformed in the Y direction in which the first restrictor 31 and the second restrictor 32 collide via the buffer 33. Consequently, the collision energy between the first restrictor 31 and the second restrictor 32 can be easily absorbed by the deformation of the deformable portion 342 due to the collision between the first restrictor 31 and the second restrictor 32 via the buffer 33.

According to this embodiment, as described above, the deformable portion 342 is configured to bend and deform in the Y direction in which the first restrictor 31 and the second restrictor 32 collide via the buffer 33 when the first restrictor 31 and the second restrictor 32 collide via the buffer 33. Accordingly, the deformable portion 342 bends and deforms in the Y direction in which the first restrictor 31 and the second restrictor 32 collide via the buffer 33, and thus the collision energy between the first restrictor 31 and the second restrictor 32 can be easily absorbed by the bending deformation of the deformable portion 342 due to the collision between the first restrictor 31 and the second restrictor 32 via the buffer 33.

According to this embodiment, as described above, the deformable portion 342 has a width smaller than the width of the buffer 33 in the Y direction in which the first restrictor 31 and the second restrictor 32 collide via the buffer 33. Accordingly, the width of the deformable portion 342 is smaller than the width of the buffer 33 in the Y direction in which the first restrictor 31 and the second restrictor 32 collide via the buffer 33, and thus the deformable portion 342 can be relatively easily deformed in the Y direction in which the first restrictor 31 and the second restrictor 32 collide via the buffer 33. Consequently, the collision energy between the first restrictor 31 and the second restrictor 32 can be easily absorbed by the deformation of the deformable portion 342 due to the collision between the first restrictor 31 and the second restrictor 32 via the buffer 33.

According to this embodiment, as described above, the buffer 33 includes the side surfaces 331a and 331b to contact the deformable member 34 when the first restrictor 31 and the second restrictor 32 collide via the buffer 33, and is configured to transmit the collision between the first restrictor 31 and the second restrictor 32 to the deformable member 34 via the side surface 331a or 331b. Accordingly, the collision between the first restrictor 31 and the second restrictor 32 via the buffer 33 is transmitted to the deformable member 34 via the side surface 331a or 331b of the buffer 33, and thus the deformable member 34 can be relatively easily deformed by the collision between the first restrictor 31 and the second restrictor 32. Consequently, the collision energy between the first restrictor 31 and the second restrictor 32 can be easily absorbed by the deformation of the deformable member 34 due to the collision between the first restrictor 31 and the second restrictor 32 via the buffer 33.

According to this embodiment, as described above, the buffer 33 includes the fitting 331 including the side surfaces 331a and 331b and configured to fit into the deformable member 34, and is configured to transmit the collision between the first restrictor 31 and the second restrictor 32 to the deformable member 34 via the side surface 331a or 331b of the fitting 331. Accordingly, by using the side surfaces 331a and 331b of the fitting 331 for attaching the buffer 33 to the deformable member 34, the collision between the first restrictor 31 and the second restrictor 32 via the buffer 33 can be transmitted to the deformable member 34 via the side surface 331a or 331b of the fitting 331 while the complexity of the structure is reduced or prevented.

According to this embodiment, as described above, the buffer 33 includes the first transmitting portion 332 to transmit the collision between the first restrictor 31 and the second restrictor 32 on the first side with respect to the deformable member 34, and the second transmitting portion 333 opposite to the first transmitting portion 332 to transmit the collision between the first restrictor 31 and the second restrictor 32 on the second side with respect to the deformable member 34. Accordingly, a single buffer 33 can transmit the collision between the first restrictor 31 and the second restrictor 32 on both the first and second sides with respect to the deformable member 34, and thus it is not necessary to provide separate buffers 33 on both the first and second sides with respect to the deformable member 34. Consequently, the collision energy between the first restrictor 31 and the second restrictor 32 can be absorbed by the buffer 33 while an increase in the number of components is reduced or prevented.

According to this embodiment, as described above, the deformable member 34 is removably fixed. Accordingly, even when the deformable member 34 is deformed due to the collision between the first restrictor 31 and the second restrictor 32 via the buffer 33, the deformed deformable member 34 can be easily replaced.

According to this embodiment, as described above, the buffer 33 is removably fixed. Accordingly, even when the buffer 33 is deteriorated due to the collision between the first restrictor 31 and the second restrictor 32 via the buffer 33, the deteriorated buffer 33 can be easily replaced.

According to this embodiment, as described above, the buffer 33 has a mechanical strength lower than the mechanical strength of the deformable member 34. Accordingly, the buffer 33 has a mechanical strength lower than the mechanical strength of the deformable member 34, and thus the buffer 33 can easily absorb the collision energy between the first restrictor 31 and the second restrictor 32.

### Modified Examples

The embodiment disclosed this time must be considered as illustrative in all points and not restrictive. The scope of the present disclosure is not shown by the above description of the embodiment but by the scope of claims for patent, and all modifications (modified examples) within the meaning and scope equivalent to the scope of claims for patent are further included.

For example, while the example in which the first restrictor 31 includes the buffer 33 has been shown in the aforementioned embodiment, the present disclosure is not limited to this. In the present disclosure, as in a first modified example shown in FIG. 6, the second restrictor 32 may include the buffer 33. Alternatively, both the first restrictor 31 and the second restrictor 32 may include buffers. When both the first restrictor 31 and the second restrictor 32 include buffers, the configurations of the buffers, including the shapes, may be the same as or different from each other.

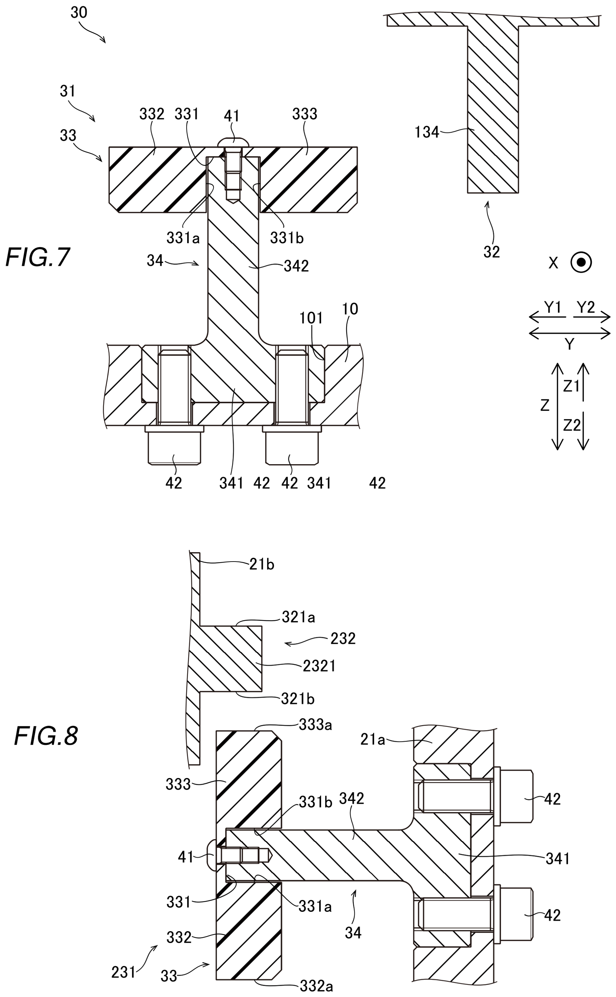

While the example in which the first restrictor 31 includes the deformable member 34 has been shown in the aforementioned embodiment, the present disclosure is not limited to this. In the present disclosure, as in a second modified example shown in FIG. 7, the second restrictor 32 may include a deformable member 134. The deformable member 134 is deformed due to the collision between the first restrictor 31 and the second restrictor 32 via the buffer 33. When both the first restrictor 31 and the second restrictor 32 include deformable members, the configurations of the deformable members, including the shapes, may be the same as or different from each other. Alternatively, only the second restrictor 32 may include a deformable member.

While the example in which the base 10 is provided as the first member according to the present disclosure, and the link 21a is provided as the second member according to the present disclosure has been shown in the aforementioned embodiment, the present disclosure is not limited to this. In the present disclosure, as in a third modified example shown in FIG. 8, the link 21a may be provided as the first member according to the present disclosure, and the link 21b may be provided as the second member according to the present disclosure. A first restrictor 231 is provided on the link 21a. The configuration of the first restrictor 231 is similar to the configuration of the first restrictor 31 according to the aforementioned embodiment, except for the orientation. A second restrictor 232 is provided on the link 21b. The second restrictor 232 includes a protrusion 2321 and a protrusion separate from the protrusion 2321. When the link 21b rotates in the first direction, the first restrictor 231 and the protrusion 2321 of the second restrictor 232 collide via the buffer 33. When the link 21b rotates in the second direction, the first restrictor 231 and the protrusion separate from the protrusion 2321 of the second restrictor 232 collide via the buffer 33. Alternatively, the link 21b may be provided as the first member according to the present disclosure, and the link 21c may be provided as the second member according to the present disclosure, or another link may be provided as the first member or the second member. In such a case, at least one of the first restrictor and the second restrictor is only required to include a buffer. Furthermore, at least one of the first restrictor and the second restrictor is only required to include a deformable member.

While the example in which the robot 100, which is a 6-axis vertical articulated robot, is provided as the robot according to the present disclosure has been shown in the aforementioned embodiment, the present disclosure is not limited to this. In the present disclosure, the robot may be a horizontal articulated robot or a robot including a linear motion mechanism, for example. When the robot is a vertical articulated robot, the robot may alternatively be a vertical articulated robot with other than six axes, such as seven axes.

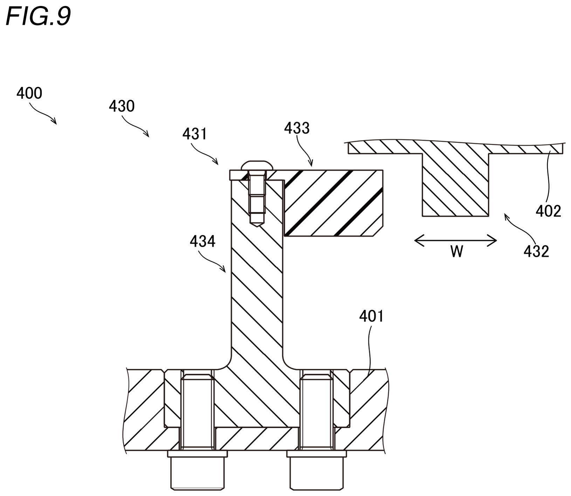

In a fourth modified example shown in FIG. 9, a robot 400 including a linear motion mechanism is provided as the robot according to the present disclosure. The robot 400 includes a first member 401 serving as a fixed member, a second member 402 serving as a movable member to linearly move in a W direction relative to the first member 401, and a restriction mechanism 430 to restrict the relative linear movement range of the second member 402 with respect to the first member 401. The restriction mechanism 430 includes a first restrictor 431 on the first member 401 and a second restrictor 432 on the second member 402. The first restrictor 431 includes a buffer 433 to cushion a collision between the first restrictor 431 and the second restrictor 432, and a deformable member 434 that deforms due to the collision between the first restrictor 431 and the second restrictor 432 via the buffer 433 when the second member 402 linearly moves in the W direction relative to the first member 401. In such a case, at least one of the first restrictor and the second restrictor is only required to include a buffer. Furthermore, at least one of the first restrictor and the second restrictor is only required to include a deformable member. In the present disclosure, a buffer may be provided on only one side with respect to the deformable member, as in the fourth modified example shown in FIG. 9.

While the example in which the deformable portion 342 bends and deforms in the direction in which the first restrictor 31 and the second restrictor 32 collide via the buffer 33 when the first restrictor 31 and the second restrictor 32 collide via the buffer 33 has been shown in the aforementioned embodiment, the present disclosure is not limited to this. In the present disclosure, as long as the collision energy is absorbed, the deformable portion 342 may be deformed in any manner when the first restrictor 31 and the second restrictor 32 collide via the buffer 33.

While the example in which the buffer 33 is made of resin has been shown in the aforementioned embodiment, the present disclosure is not limited to this. In the present disclosure, the buffer 33 may not be made of resin as long as the same cushions the collision between the first restrictor 31 and the second restrictor 32, and the buffer 33 may be a honeycomb member made of metal, for example.

While the example in which the buffer 33 is fixed by the fasteners 41 has been shown in the aforementioned embodiment, the present disclosure is not limited to this. In the present disclosure, the buffer 33 may be fixed by other than the fasteners 41, such as an adhesive.

While the example in which one buffer 33 includes the first transmitting portion 332 and the second transmitting portion 333 has been shown in the aforementioned embodiment, the present disclosure is not limited to this. In the present disclosure, two buffers, a buffer corresponding to the first transmitting portion 332 and a buffer corresponding to the second transmitting portion 333, may be provided independently of each other.

While the example in which the fitting 331 includes the recess has been shown in the aforementioned embodiment, the present disclosure is not limited to this. In the present disclosure, the fitting 331 may include a hole.

In the aforementioned embodiment, the buffer 33 and the deformable member 34 are designed to sufficiently absorb collision energy, and thus when the first restrictor 31 and the second restrictor 32 collide via the buffer 33, the second restrictor 32 does not rotationally move beyond the first restrictor 31, but a spare restrictor may be further provided in case the second restrictor 32 rotationally moves beyond the first restrictor 31.

### Aspects

It will be appreciated by those skilled in the art that the exemplary embodiments described above are specific examples of the following aspects.

### (Item 1)

A robot comprising:
a first member;
a second member configured to move relative to the first member; and
a restriction mechanism including a first restrictor on the first member and a second restrictor on the second member to restrict a relative movement range of the second member with respect to the first member; wherein
at least one of the first restrictor and the second restrictor includes a buffer to cushion a collision between the first restrictor and the second restrictor; and
at least one of the first restrictor and the second restrictor includes a deformable member configured to deform due to the collision between the first restrictor and the second restrictor via the buffer when the second member moves relative to the first member.

### (Item 2)

The robot according to item 1, wherein the deformable member includes a base and a deformable portion connected to the base and having a width smaller than a width of the base in a direction in which the first restrictor and the second restrictor collide via the buffer.

### (Item 3)

The robot according to item 2, wherein the deformable portion is configured to bend and deform in the direction in which the first restrictor and the second restrictor collide via the buffer when the first restrictor and the second restrictor collide via the buffer.

### (Item 4)

The robot according to item 2 or 3, wherein the deformable portion has the width smaller than a width of the buffer in the direction in which the first restrictor and the second restrictor collide via the buffer.

### (Item 5)

The robot according to any one of items 1 to 4, wherein the buffer includes a side surface to contact the deformable member when the first restrictor and the second restrictor collide via the buffer, and is configured to transmit the collision between the first restrictor and the second restrictor to the deformable member via the side surface.

### (Item 6)

The robot according to item 5, wherein the buffer includes a fitting including the side surface and configured to fit into the deformable member, and is configured to transmit the collision between the first restrictor and the second restrictor to the deformable member via the side surface of the fitting.

### (Item 7)

The robot according to any one of items 1 to 6, wherein the buffer includes a first transmitting portion to transmit the collision between the first restrictor and the second restrictor on a first side with respect to the deformable member, and a second transmitting portion opposite to the first transmitting portion to transmit the collision between the first restrictor and the second restrictor on a second side with respect to the deformable member.

### (Item 8)

The robot according to any one of items 1 to 7, wherein the deformable member is removably fixed.

### (Item 9)

The robot according to any one of items 1 to 8, wherein the buffer is removably fixed.

### (Item 10)

The robot according to any one of items 1 to 9, wherein the buffer has a mechanical strength lower than a mechanical strength of the deformable member.

### Description of Reference Numerals

10: base (first member)
21a: link (first member, second member)
21b: link (first member, second member)
21c: link (second member)
30, 430: restriction mechanism
31, 231, 431: first restrictor
32, 232, 432: second restrictor
33, 433: buffer
34, 134, 434: deformable member
100, 400: robot
331: fitting
331a, 331b: side surface
332: first transmitting portion
333: second transmitting portion
341: base
342: deformable portion
401: first member
402: second member

## Claims

1. A robot comprising:
a first member;
a second member configured to move relative to the first member; and
a restriction mechanism including a first restrictor on the first member and a second restrictor on the second member to restrict a relative movement range of the second member with respect to the first member; wherein
at least one of the first restrictor and the second restrictor includes a buffer to cushion a collision between the first restrictor and the second restrictor; and
at least one of the first restrictor and the second restrictor includes a deformable member configured to deform due to the collision between the first restrictor and the second restrictor via the buffer when the second member moves relative to the first member.

2. The robot according to claim 1, wherein the deformable member includes a base and a deformable portion connected to the base and having a width smaller than a width of the base in a direction in which the first restrictor and the second restrictor collide via the buffer.

3. The robot according to claim 2, wherein the deformable portion is configured to bend and deform in the direction in which the first restrictor and the second restrictor collide via the buffer when the first restrictor and the second restrictor collide via the buffer.

4. The robot according to claim 2, wherein the deformable portion has the width smaller than a width of the buffer in the direction in which the first restrictor and the second restrictor collide via the buffer.

5. The robot according to claim 1, wherein the buffer includes a side surface to contact the deformable member when the first restrictor and the second restrictor collide via the buffer, and is configured to transmit the collision between the first restrictor and the second restrictor to the deformable member via the side surface.

6. The robot according to claim 5, wherein the buffer includes a fitting including the side surface and configured to fit into the deformable member, and is configured to transmit the collision between the first restrictor and the second restrictor to the deformable member via the side surface of the fitting.

7. The robot according to claim 1, wherein the buffer includes a first transmitting portion to transmit the collision between the first restrictor and the second restrictor on a first side with respect to the deformable member, and a second transmitting portion opposite to the first transmitting portion to transmit the collision between the first restrictor and the second restrictor on a second side with respect to the deformable member.

8. The robot according to claim 1, wherein the deformable member is removably fixed.

9. The robot according to claim 1, wherein the buffer is removably fixed.

10. The robot according to claim 1, wherein the buffer has a mechanical strength lower than a mechanical strength of the deformable member.
